(19) **Europäisches Patentamt / European Patent Office / Office européen des brevets**

(11) **EP 4 091 307 B1**

(12) **EUROPEAN PATENT SPECIFICATION**

(45) Date of publication and mention
of the grant of the patent:
**12.02.2025 Bulletin 2025/07**

(21) Application number: **20701556.1**

(22) Date of filing: **20.01.2020**

(51) International Patent Classification (IPC):
***H04L 1/1829*** (2023.01)    ***H04L 5/00*** (2006.01)
***H04L 27/26*** (2006.01)

(52) Cooperative Patent Classification (CPC):
**H04L 27/2666; H04L 27/2605; H04L 27/2646;**
H04L 1/1829; H04L 5/0053

(86) International application number:
**PCT/EP2020/051217**

(87) International publication number:
**WO 2021/148103 (29.07.2021 Gazette 2021/30)**

(54) **COMMUNICATION DEVICES FOR HANDLING EXCESSIVE DELAY SPREAD**

KOMMUNIKATIONSVORRICHTUNGEN ZUR HANDHABUNG ÜBERMÄSSIGER VERZÖGERUNGSSTREUUNG

DISPOSITIFS DE COMMUNICATION POUR TRAITER UN ÉTALEMENT DE RETARD EXCESSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2022 Bulletin 2022/47**

(73) Proprietor: **Huawei Technologies Co., Ltd.**
**Shenzhen, Guangdong 518129 (CN)**

(72) Inventors:
• **WANG, Neng**
 **16440 Kista (SE)**
• **TUMULA, Chaitanya**
 **16440 Kista (SE)**
• **KAPETANOVIC, Dzevdan**
 **16440 Kista (SE)**
• **HU, Sha**
 **16440 Kista (SE)**
• **SEMENOV, Sergei**
 **16440 Kista (SE)**
• **LIU, Xiaohui**
 **16440 Kista (SE)**

(74) Representative: **Gill Jennings & Every LLP**
**The Broadgate Tower**
**20 Primrose Street**
**London EC2A 2ES (GB)**

(56) References cited:
 **US-A1- 2010 061 224     US-B1- 9 313 063**

• **SHI WEI ET AL: "Reduced Complexity Interference Cancellation for OFDM Systems With Insufficient Cyclic Prefix", 2019 11TH INTERNATIONAL CONFERENCE ON WIRELESS COMMUNICATIONS AND SIGNAL PROCESSING (WCSP), IEEE, 23 October 2019 (2019-10-23), pages 1 - 6, XP033671825, DOI: 10.1109/ WCSP.2019.8928022**

## Description

## Technical Field

The disclosure relates to a first communication device and a second communication device for handling excessive delay spread (EDS) in a radio channel. Furthermore, the disclosure also relates to corresponding methods and a computer program.

## Background

In multi carrier (MC) systems, e.g. those based on orthogonal frequency division multiplexing (OFDM), in communication systems like 3GPP long time evolution (LTE) and new radio (NR), transmission takes place symbol by symbol. As the symbols propagate one by one to the receiver, the radio path from the transmitter to receiver will introduce delay spread in the time domain. This means that the symbols will be spread out in the time domain and will thus interfere with consecutive symbols. This is referred as inter-symbol interference (ISI) or, in cases ISI exceeds the length of the guard interval, residual ISI, and leads to signal distortion and less reliable communication.

ISI can be mitigated by inserting a cyclic prefix (CP) at the beginning of each transmitted symbol, also called guard interval. However, the length of CP must be greater than the maximum delay spread of the dispersive channel. The introduction of CP however reduces the bandwidth efficiency and decreases the data rate because the CP conveys no information. It also disperses the transmitter energy where the signal-to-noise (SNR) lost due to the CP introduction indicates the loss of transmission energy. The amount of consumed power relies on the length of the CP. Although CP reduces the spectral efficiency, it is widely used in MC or even single-carrier (SC) systems due to the low-complex equalization procedure on frequency-domain. In case of EDS channel, the channel delay spread is larger than the CP length which also causes inter-carrier interference (ICI).

In LTE and NR systems, two kinds of CP configuration are supported, i.e. normal CP and extended CP. The spectral efficiency loss due to CP is valid for both configurations. The length of CP is predefined in a given communication system, e.g. LTE and NR, while the channel delay varies across scenarios depending on the environment of propagation. Theoretically, ICI and ISI exist as long as the maximum channel delay is larger than CP. Moreover, ICI and ISI increase with increased channel delay and power of paths larger than CP.

US2010061224A1 relates to transmitter for extending guard interval for individual user equipment in OFDMA systems.

US9313063B1 relates to apparatus and method for transmitting data with conditional zero padding.

SHI WEI ET AL, "Reduced Complexity Interference Cancellation for OFDM Systems With Insufficient Cyclic Prefix", 2019 11TH INTERNATIONAL CONFERENCE ON WIRELESS COMMUNICATIONS AND SIGNAL PROCESSING (WCSP), IEEE, (20191023), doi:10.1109/WCSP.2019.8928022, pages 1 - 6, relates to reduced complexity interference cancellation for OFDM systems with insufficient cyclic prefix.

Summary

An objective of implementations of the disclosure is to provide a solution which mitigates or solves the drawbacks and problems of conventional solutions.

The invention has been defined in the independent claims. Further specific technical features have been defined in the dependent claims.

According to a first aspect of the disclosure, the above mentioned and other objectives are achieved with a first communication device for a communication system, the communication device being configured to

transmit at least one first symbol in a first physical resource block, PRB, bundling in a radio channel to a second communication device; and
transmit at least one second symbol in a second physical resource block bundling to the second communication device upon determining that a delay spread of the radio channel exceeds a cyclic prefix length of the first symbol, wherein a size of the second physical resource block bundling is larger than a size of the first physical resource block bundling.

At least one first symbol means one or more first symbols and at least one second symbol means one or more second symbols. Said symbols can e.g. be OFDM symbols in NR and LTE systems but are not limited thereto.

An advantage of the first communication device according to the first aspect is that PRB bundling is dynamically adapted for different delay spread conditions on the radio channel. Hence, bandwidth efficiency and data rate are improved.

In an implementation form of a first communication device according to the first aspect, the size of the first physical resource block bundling is equal to 1, 2, 3 or 4 physical resource blocks.

An advantage with this implementation form is that flexibility of using frequency diversity is provided.

In an implementation form of a first communication device according to the first aspect, the size of the second physical resource block bundling is wideband.

An advantage with this implementation form is bandwidth efficiency and data rate improvement due to the use of wideband.

In an implementation form of a first communication device according to the first aspect, the first communication device is configured to

transmit a first control message to the second communication device, wherein the first control message includes the second physical resource block bundling.

An advantage with this implementation form is that the second communication device will be configured with the second physical resource block bundling by receiving the first control message.

In an implementation form of a first communication device according to the first aspect, determining that the delay spread of the radio channel exceeds the cyclic prefix length of the first symbol comprises

receive a second control message from the second communication device, wherein the second control message indicates that the delay spread of the radio channel exceeds the cyclic prefix length of the first symbol.

An advantage with this implementation form is that the first communication device is informed that the radio channel has excessive delay spread. This is especially the case in frequency division duplex.

In an implementation form of a first communication device according to the first aspect, the first communication device is configured to, upon determining that a third symbol has a higher priority than a fourth symbol preceding or succeeding the third symbol and that the delay spread of the radio channel exceeds the cyclic prefix length of the third symbol:

puncture a part of the fourth symbol;
extend a cyclic prefix of the third symbol into a tail of the fourth symbol; or
add a cyclic postfix of the third symbol into a head of the fourth symbol.

An advantage with this implementation form is increased transmission reliability for high priority symbols by applying any of the above mentioned operations.

In an implementation form of a first communication device according to the first aspect, the third symbol is any of: a downlink control information, DCI, uplink control information, UCI, channel state information reference signal, CSI-RS, sounding reference signal, SRS, synchronization signal block, SSB, demodulation reference signal, DMRS, or ultra-reliable and low latency communication, URLLC, symbol.

In an implementation form of a first communication device according to the first aspect, the first communication device is configured to

receive code block group based acknowledge or code block group based negative acknowledge feedback in response to transmission of the fourth symbol to the second communication device.

An advantage with this implementation form is that the loss of data in low priority symbols is avoided or suppressed.

According to a second aspect of the disclosure, the above mentioned and other objectives are achieved with a second communication device for a communication system, the second communication device being configured to

receive at least one first symbol in a first physical resource block bundling in a radio channel from a first communication device;
receive a first control message from the first communication device, wherein the first control message includes a second physical resource block bundling, wherein a size of the second physical resource block bundling is larger than a size of the first physical resource block bundling; and
receive at least one second symbol in the second physical resource block bundling from the first communication device based on the first control message.

An advantage of the second communication device according to the second aspect is that PRB bundling is dynamically adapted for different delay spread conditions on the radio channel. Hence, bandwidth efficiency and data rate are improved.

In an implementation form of a second communication device according to the second aspect, the size of the first physical resource block bundling is equal to 1, 2, 3 or 4 physical resource blocks.

An advantage with this implementation form is that flexibility of using frequency diversity is provided.

In an implementation form of a second communication device according to the second aspect, the size of the second physical resource block bundling is wideband.

An advantage with this implementation form is bandwidth efficiency and data rate improvement due to the use of wideband.

In an implementation form of a second communication device according to the second aspect, the second communication device is configured to

transmit a second control message to the first communication device upon determining that a delay spread of the radio channel exceeds a cyclic prefix length of the first symbol, wherein the second control message indicates that the delay spread of the radio channel exceeds the cyclic prefix length of the first symbol.

An advantage with this implementation form is that the first communication device is informed that the radio channel has excessive delay spread. This is especially the case in frequency division duplex.

In an implementation form of a second communication device according to the second aspect, the second communication device is configured to

receive a third symbol and a fourth symbol preceding or succeeding the third symbol, wherein the third symbol has a higher priority than the fourth symbol, and wherein
a part of the fourth symbol is punctured;
a cyclic prefix of the third symbol is extended into a tail of the fourth symbol; or
a cyclic postfix of the third symbol is added into a head of the fourth symbol.

An advantage with this implementation form is increased transmission reliability for high priority symbols by applying any of the above mentioned operations.

In an implementation form of a second communication device according to the second aspect, the third symbol is any of: a DCI, UCI, CSI-RS, SRS, SSB, DMRS, or URLLC symbol.

In an implementation form of a second communication device according to the second aspect, the second communication device is configured to

determine an acknowledge or negative acknowledge outcome at the reception of the fourth symbol;
transmit CBG-based acknowledge or CBG-based negative acknowledge feedback to the first communication device according to the determined acknowledge or negative acknowledge outcome.

An advantage with this implementation form is that the loss of data in the low priority symbols due to puncturing may be avoided.

According to a third aspect of the disclosure, the above mentioned and other objectives are achieved with a method for a first communication device, the method comprises

transmitting at least one first symbol in a first physical resource block bundling in a radio channel to a second communication device; and
transmitting at least one second symbol in a second physical resource block bundling to the second communication device upon determining that a delay spread of the radio channel exceeds a cyclic prefix length of the first symbol, wherein a size of the second physical resource block bundling is larger than a size of the first physical resource block bundling.

The method according to the third aspect can be extended into implementation forms corresponding to the implementation forms of the first communication device according to the first aspect. Hence, an implementation form of the method comprises the feature(s) of the corresponding implementation form of the first communication device.

The advantages of the methods according to the third aspect are the same as those for the corresponding implementation forms of the first communication device according to the first aspect.

According to a fourth aspect of the disclosure, the above mentioned and other objectives are achieved with a method for a second communication device, the method comprises

receiving at least one first symbol in a first physical resource block bundling in a radio channel from a first communication device;
receiving a first control message from the first communication device, wherein the first control message includes a second physical resource block bundling, wherein a size of the second physical resource block bundling is larger than a size of the first physical resource block bundling; and
receiving at least one second symbol in the second physical resource block bundling from the first communication device 100 based on the first control message.

The method according to the fourth aspect can be extended into implementation forms corresponding to the implementation forms of the second communication device according to the second aspect. Hence, an implementation form of the method comprises the feature(s) of the corresponding implementation form of the second communication device.

The advantages of the methods according to the fourth aspect are the same as those for the corresponding implementation forms of the second communication device according to the second aspect.

According to a fifth aspect of the disclosure, a method for a first communication device is provided, wherein the method comprises: upon determining that a third symbol has a higher priority than a fourth symbol preceding or succeeding the third symbol and that the delay spread of the radio channel exceeds the cyclic prefix length of the third symbol:

puncture a part of the fourth symbol; or
extend a cyclic prefix of the third symbol into a tail of the fourth symbol; or
add a cyclic postfix of the third symbol into a head of the fourth symbol.

In an implementation form of a first communication device according to the fifth aspect, wherein the third symbol is any of: a DCI, UCI, CSI-RS, SRS, SSB, DMRS, or URLLC symbol.

A sixth aspect of this application provides a chip, and the chip may be used for a communication device. The chip includes at least one communications interface, at least one processor, and at least one memory, where the communications interface, the processor, and the memory are interconnected by using a circuit (or by using a bus in some cases), and the processor invokes an instruction stored in the memory to perform the method according to the second or fourth or fifth aspect.

A seventh aspect of this application provides a communication device, and the communication device includes a memory and a processor. The memory is configured to store a program instruction, and the processor is configured to invoke the program instruction in the memory, to implement a function of the communication device in the second or fourth or fifth aspect.

A eighth aspect of this application provides a non-volatile storage medium, and the non-volatile storage medium stores one or more pieces of program code. When a communication device executes the program code, the communication device performs a related method step performed by the communication device in the second or fourth or fifth aspect.

The disclosure also relates to a computer program, characterized in program code, which when run by at least one processor causes said at least one processor to execute any method according to implementations of the disclosure. Further, the disclosure also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the implementations of the disclosure will be apparent from the following detailed description.

**Brief Description of the Drawings**

The appended drawings are intended to clarify and explain different implementations of the disclosure, in which:

- Fig. 1 shows a first communication device according to an implementation of the disclosure;
- Fig. 2 shows a method for a first communication device according to an implementation of the disclosure;
- Fig. 3 shows a second communication device according to an implementation of the disclosure;
- Fig. 4 shows a method for a second communication device according to an implementation of the disclosure;
- Fig. 5 shows a wireless communication system according to an implementation of the disclosure;
- Fig. 6 shows a signaling diagram of an implementation of the disclosure;
- Fig. 7 shows a principle of iterative ISI and ICI cancellation according to an implementation of the disclosure;
- Fig. 8 shows a signaling diagram of an implementation of the disclosure;
- Figs. 9a - 9c show an approach to perform symbol puncturing according to an implementation of the disclosure; and
  Figs. 10a - 10b show an approach to perform symbol puncturing according to an implementation of the disclosure.

**Detailed Description**

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In wireless communication, signal to interference plus noise ratio (SINR) is commonly used as a way to measure the quality of wireless connections. SINR has to be high enough in order to correctly decode transmitted packets at the receiver. For a given signal strength and noise level, one way to improve SINR is to reduce the effective interference, which is dominated by ISI and ICI in EDS channels.

In a conventional solution an iterative technique, called residual ISI cancellation (RISIC), is developed for OFDM systems to mitigate residual ISI. RISIC uses a combination of tail cancellation and cyclic restoration and is shown to offer performance improvements. The RISIC algorithm is applied to a typical terrestrial high-definition television (HDTV) broadcasting system that uses a concatenated coding scheme for error control. RISIC algorithm can effectively mitigate residual ISI on static or slowly fading ISI channels.

However, iterative cancellation of ISI and ICI in data equalization in conventional solutions require wideband scheduling and precoding in order to get channel tail estimation in time domain. Currently, there is no such cooperation and coordination between gNB and UE in case of EDS thus ISI and ICI are hard to cancel at the receiver side.

A symmetric structure of time domain DMRS is proposed to improve channel estimation performance in case of ISI and ICI. It can be supported by current port and physical downlink shared channel (PDSCH) time configurations. However, OFDM signal in frequency domain is not orthogonal in case of multi-user multiple-input multiple-output (MU-MIMO). The inventors have realized that a more general solution is desired to reduce or mitigate the problem of ICI and ISI so that the communication system can work efficiently in challenging cases of EDS. Therefore, the present disclosure present apparatuses and corresponding methods providing such solutions.

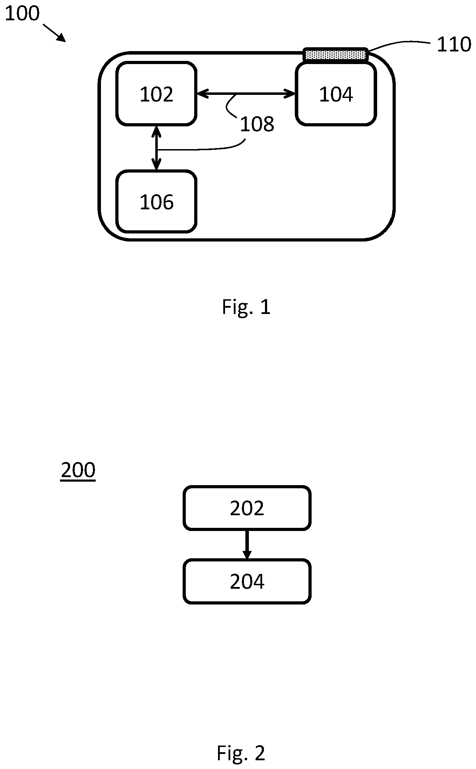

Fig. 1 shows a first communication device 100 according to an implementation of the disclosure. In the implementation shown in Fig. 1, the first communication device 100 comprises a processor 102, a transceiver 104 and a memory 106. The processor 102 may be coupled to the transceiver 104 and the memory 106 by communication means 108 known in the art. The first communication device 100 may further comprise an antenna or antenna array 110 coupled to the transceiver 104, which means that the first communication device 100 may be configured for wireless communications in a wireless communication system.

That the first communication device 100 may be configured to perform certain actions can in this disclosure be understood to mean that the first communication device 100 comprises suitable means, such as e.g. the processor 102 and the transceiver 104, configured to perform said actions.

The processor 102 of the first communication device 100 may be referred to as one or more general-purpose central processing units (CPUs), one or more digital signal processors (DSPs), one or more application-specific integrated circuits (ASICs), one or more field programmable gate arrays (FPGAs), one or more programmable logic devices, one or more discrete gates, one or more transistor logic devices, one or more discrete hardware components, and one or more chipsets.

The memory 106 of the first communication device 100 may be a read-only memory, a random access memory, or a non-volatile random access memory (NVRAM).

The transceiver 104 of the first communication device 100 may be a transceiver circuit, a power controller, an antenna, or an interface which communicates with other modules or devices.

In implementations, the transceiver 104 of the first communication device 100 may be a separate chipset or being integrated with the processor 102 in one chipset. While in some implementations, the processor 102, the transceiver 104, and the memory 106 of the first communication device 100 are integrated in one chipset.

According to implementations of the disclosure the first communication device 100 is configured to transmit at least one first symbol in a first PRB bundling in a radio channel to a second communication device 300.

The first communication device 100 is further configured transmit at least one second symbol in a second PRB bundling to the second communication device 300 upon determining that a delay spread of the radio channel exceeds a CP length of the first symbol. The size of the second PRB bundling is larger than a size of the first PRB bundling.

In one implementation, a PRB bundling may be defined according to the following. A UE may assume that precoding granularity is consecutive resource blocks in the frequency domain, and the UE is not expected to be scheduled with non-contiguous PRBs and the UE may assume that the same precoding is applied to the allocated resource. In one implementation, A PRB bundling may be a set of PRB or a set of frequency/time resource or resource block.

A PRB can be defined in many different ways. In one case a PRB can be defined in number of subcarriers, such as e.g. $N_{\text{sc}}^{\text{RB}} = 12$ consecutive subcarriers in the frequency domain in NR and LTE. A subcarrier can have a frequency value $\Delta f$ as shown in Table 1 below.

**Table 1**

| $\mu$ | $\Delta f = 2^{\mu} \cdot 15$[kHz] |
|---|---|
| 0 | 15 |
| 1 | 30 |
| 2 | 60 |
| 3 | 120 |
| 4 | 240 |

Fig. 2 shows a flow chart of a corresponding method 200 which may be executed in a first communication device 100, such as the one shown in Fig. 1. The method 200 comprises transmitting 202 at least one first symbol in a first PRB bundling in a radio channel to a second communication device 300. The method 200 further comprises transmitting 204 at least one second symbol in a second PRB bundling to the second communication device 300 upon determining that a delay spread of the radio channel exceeds a CP length of the first symbol, wherein a size of the second PRB bundling is larger than a size of the first PRB bundling.

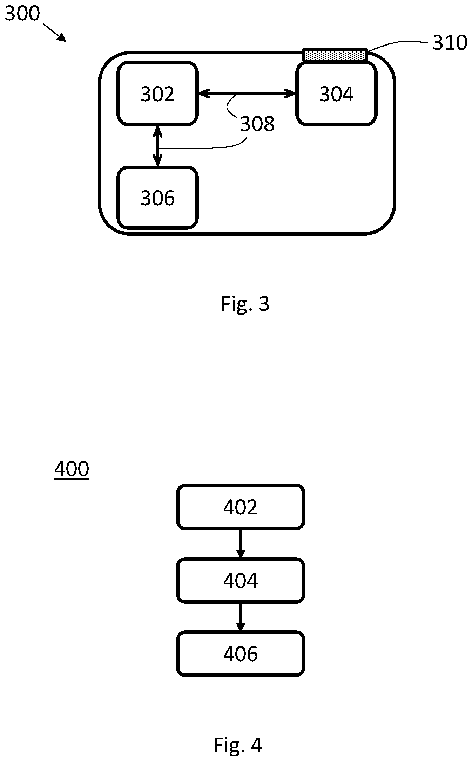

Fig. 3 shows a second communication device 300 according to an implementation of the disclosure. In the implementation shown in Fig. 3, the second communication device 300 comprises a processor 302, a transceiver 304 and a memory 306. The processor 302 may be coupled to the transceiver 304 and the memory 306 by communication means 308 known in the art. The second communication device 300 may further comprise an antenna or antenna array 310 coupled to the transceiver 304, which means that the second communication device 300 may be configured for wireless communications in a wireless communication system.

That the second communication device 300 may be configured to perform certain actions can in this disclosure be understood to mean that the second communication device 300 comprises suitable means, such as e.g. the processor 302 and the transceiver 304, configured to perform said actions.

The processor 302 of the second communication device 300 may be referred to as one or more general-purpose CPUs, one or more DSPs, one or more ASICs, one or more FPGAs, one or more programmable logic devices, one or more discrete gates, one or more transistor logic devices, one or more discrete hardware components, and one or more chipsets.

The memory 306 of the second communication device 300 may be a read-only memory, a random access memory, or a NVRAM.

The transceiver 304 of the second communication device 300 may be a transceiver circuit, a power controller, an antenna, or an interface which communicates with other modules or devices.

In implementations, the transceiver 304 of the second communication device 300 may be a separate chipset or being integrated with the processor 302 in one chipset. While in some implementations, the processor 302, the transceiver 304, and the memory 306 of the second communication device 300 are integrated in one chipset.

According to implementations of the disclosure the second communication device 300 is configured to receive at least one first symbol in a first PRB bundling in a radio channel from a first communication device 100. The second communication device 300 is further configured to receive a first control message 510 from the first communication device 100. The first control message 510 includes a second PRB bundling, wherein a size of the second PRB bundling is larger than a size of the first PRB bundling. The second communication device 300 is further configured to receive at least one second symbol in the second PRB bundling from the first communication device 100 based on the first control message 510.

Fig. 4 shows a flow chart of a corresponding method 400 which may be executed in a second communication device 300, such as the one shown in Fig. 3. The method 400 comprises receiving 402 at least one first symbol in a first PRB bundling in a radio channel from a first communication device 100. The method 400 further comprises receiving 404 a first control message 510 from the first communication device 100. The first control message 510 includes a second PRB bundling. The size of the second PRB bundling is larger than a size of the first PRB bundling. The method 400 further comprises receiving 406 at least one second symbol in the second PRB bundling from the first communication device 100 based on the first control message 510.

It is noted that the order of step 402 and 404 can be reversed without deviating from the scope of the disclosure. Hence, in implementations the first control message 510 can be received before reception of the first symbol.

Further, that the first control message 510 includes a second PRB bundling can mean that information about the second PRB bundling is comprised in the first control message 510. It can also mean that said information is indicated by the first control message 510. Thereby, the second communication device 300 is configured with the second PRB bundling.

The first communication device 100 and/or the second communication device 300 in this disclosure may be a client device including but is not limited to: a UE such as a smart phone, a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, an in-vehicle device, a wearable device, an integrated access and backhaul node (IAB) such as mobile car or equipment installed in a car, a drone, a device-to-device (D2D) device, a wireless camera, a mobile station, an access terminal, an user unit, a wireless communication device, a station of wireless local access network (WLAN), a wireless enabled tablet computer, a laptop-embedded equipment, an universal serial bus (USB) dongle, a wireless customer-premises equipment (CPE), and/or a chipset. In an Internet of things (IOT) scenario, the client device may represent a machine or another device or chipset which performs communication with another wireless device and/or a network equipment.

The UE may further be referred to as a mobile telephone, a cellular telephone, a computer tablet or laptop with wireless capability. The UE in this context may e.g. be portable, pocket-storable, hand-held, computer-comprised, or vehicle-mounted mobile device, enabled to communicate voice and/or data, via the radio access network, with another entity, such as another receiver or a server. The UE can be a station (STA), which is any device that contains an IEEE 802.11-conformant media access control (MAC) and physical layer (PHY) interface to the wireless medium (WM). The UE may also be configured for communication in 3GPP related LTE and LTE-Advanced, in WiMAX and its evolution, and in fifth generation wireless technologies, such as NR.

However, the first communication device 100 and/or the second communication device 300 in this disclosure may also be a network access node including but is not limited to: a NodeB in wideband code division multiple access (WCDMA) system, an evolutional Node B (eNB) or an evolved NodeB (eNodeB) in LTE systems, or a relay node or an access point, or an in-vehicle device, a wearable device, or a gNB in the fifth generation (5G) networks.

Further, the network access node herein may be denoted as a radio network access node, an access network access node, an access point, or a base station, e.g. a radio base station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a STA, which is any device that contains an IEEE 802.11-conformant MAC and PHY interface to the wireless medium. The radio network access node may also be a base station corresponding to the 5G wireless systems.

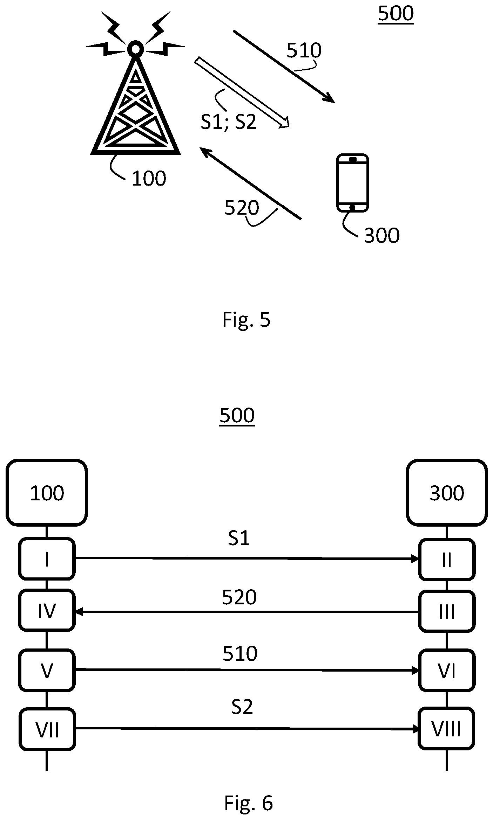

Fig. 5 illustrates a wireless communication system 500 according to an implementation of the disclosure. The wireless communication system 500 comprises a first communication device 100 and a second communication device 300 communicating with each other over a radio channel, e.g. using a radio interface. For simplicity, the wireless communication system 500 shown in Fig. 5 only comprises one first communication device 100 and one second communication device 300. However, the wireless communication system 500 may comprise any number of first communication devices 100 and any number of first communication devices 300 without deviating from the scope of the disclosure. The wireless communication system in this disclosure includes but is not limited to LTE, 5G or future wireless communication system.

In the non-limiting example in Fig. 5, the first communication device 100 act as a network access node, such as a base station (BS) whilst the second communication device 300 act as a client device, such as a UE. However, the revers case is also possible, i.e. the first communication device 100 act as a client device whilst the second communication device 300 act as a network access node.

In the wireless communication system 500, the first communication device 100 may transmit at least one first symbol S1 to the second communication device 300 over a radio channel. The first symbol may be but is not limited to an OFDM symbol in NR and LTE. The first communication device 100 may obtain a second control message 520 from the second communication device 300, the second control message comprising information 520 that the delay spread of the radio channel is larger than CP length. Based on the first control signal, the first communication device 100 may apply a second PRB bundling to transmit at least one second symbol S2. Previous to transmitting the second symbol S2 according to the second PRB bundling the first communication device 100 transmits a first control message 510 to the second communication device 300 comprising information that second PRB bundling is used for transmission of the second symbol S2.

Furthermore, Fig. 6 shows a signaling diagram illustrating the interaction between a first communication device 100 and a second communication device 300 in a communication system 500 according to implementations of the disclosure.

In step I in Fig. 6, the first communication device 100 performs transmission of at least a first symbol S1 in a first PRB bundling to the second communication device 300 over a scheduled first bandwidth (BW) using a first PRB bundling size parameter set to a first value. According to implementations the size of the first PRB bundling may be equal to 1, 2, 3 or 4 PRBs. Thus, the precoding granularity $P'_{BWP,i}$ applied by the first communication device 100 may be 1, 2, 3 or 4. The second communication device 300 may assume that precoding granularity is $P'_{BWP,i}$ consecutive resource blocks in the frequency domain.

In step II in Fig. 6, the second communication device 300 receives the at least one symbol S1 in a first PRB bundling over a radio channel from the first communication device 100. In implementations, as previously described, the size of the first PRB bundling may be equal to 1, 2, 3 or 4 PRBs.

In step III in Fig. 6, the second communication device 300 determines that the propagation channel between the first communication device 100 and the second communication device 300 is an EDS channel i.e. that the delay spread of the radio channel exceeds a CP length of the first symbol. The determining may be done either by the second communication device 300 measuring the forward link channel or based on information signaled by the first communication device 100 using downlink control channel. Generally, the time duration of the delay spread is compared to the time duration of the CP to determine if the delay spread of the radio channel exceeds the CP length of the first symbol.

According to implementations, upon determining that the delay spread of the radio channel exceeds the CP length of the first symbol, the second communication device 300 transmits a second control message 520 to the first communication device 100. The second control message 520 indicates or comprise information that the delay spread of the radio channel exceeds the CP length of the first symbol.

In step IV in Fig. 6, the first communication device 100 determines that the propagation channel to the second communication device 300 is an EDS channel based on the content of the second control message 520 received from the second communication device 300. The determining can be based on information that the propagation channel to the first communication device 100 is an EDS channel. The information can be obtained by the first communication device 100 using a reverse link from the second communication device 300. More specifically, in case of frequency division duplex (FDD), the information can be obtained based on an indication from the second communication device 300 via forward-link channel measurement and reporting e.g. in the second control message 520. In case of time division duplex (TDD), the information can be obtained based on reverse-link channel measurement by the first communication device 100 or from an indication from the second communication device 300. In one implementation, the forward-link is an uplink, the reverse-link is a downlink. Or, the forward-link is a downlink, the reverse-link is an uplink, the forward-link is a sidelink, the reverse-link is a sidelink.

In step V in Fig. 6, the first communication device 100 transmits a first control message 510 to the second communication device 300, wherein the first control message 510 may include a second PRB bundling. The first control message 510 may comprise information about the configuration of the transmission of the at least one second symbol in the second PRB bundling from the first communication device 100. The information may indicate if wideband precoding is used for data and reference signal transmission.

By setting the second PRB bundling size parameter to wideband, the first communication device 100 is employing wideband precoding granularity. This means that the second communication device 300 is not expected to be scheduled with non-contiguous PRBs and the second communication device 300 may assume that the same precoding is applied to the allocated resource.

In step VI in Fig. 6, the second communication device 300 receives the first control message 510 including the second PRB bundling.

In step VII in Fig. 6, after determining that the delay spread of the radio channel exceeds the CP length, the first communication device 100 performs transmission of at least one second symbol S2 in a second PRB bundling size to the second communication device 300. The size of the second PRB bundling is larger than the size of the first PRB bundling. In implementations, the size of the second PRB bundling may be wideband which means that PRB bundling size is equal to a scheduled second BWsize.

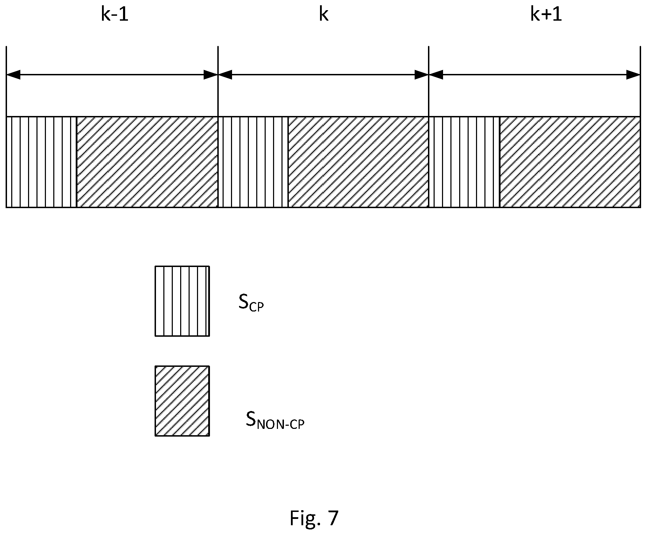

In step VIII in Fig. 6, the second communication device 300, receives the second symbol S2 in the second PRB bundling from the first communication device 100. Based on the first control message 510, comprising information about the configuration of the transmission of the at least one second symbol in the second PRB bundling, the second communication device 300 may process the received second symbol to mitigate ISI from previous symbol and ICI from current symbol. The reason for this is that when the network access node uses wideband precoding for transmission, the propagation channel in the frequency domain can have phase continuity. In this scenario, the second communication device 300 can use time-domain channel estimation algorithm and perform ISI and ICI cancellation. Such iterative ISI and ICI cancellation will now be described in more detail with reference to Fig. 7.

Fig. 7 shows principles of iterative ISI and ICI cancellation performed in the second communication device 300 according to implementations of the disclosure. Three consecutive symbols, denoted k-1, k and k+1, received by the second communication device 300 are shown in Fig. 7. Each symbol comprises a CP part, i.e. $S_{CP}$, and a non-CP part, i.e. $S_{NON-CP}$. To detect the data in symbol k in Fig. 7, the second client device 300 uses symbol k-1 and/or symbol k to cancel the impact of ISI and ICI. Similarly, to cancel the impact of ISI and ICI in the data received in symbol k+1, the second communication device 300 uses data in symbols k and k+1.

To cancel the impact of ISI and ICI in symbol k, the second communication device 300 estimates the channel tails of symbol k-1 and/or symbol k. After obtaining the channel tails of symbol k-1 and/or symbol k, the second communication device 300 uses the detected data from symbol k-1 to reconstruct the ISI part and detected data from symbol k to reconstruct the ICI part and remove it from the received signal. The second communication device 300 then uses the ISI and ICI removed signal to re-detect the data on symbol k. This operation can be performed in an iterative way to improve the data detection performance on symbol k. It is noted that in NR and LTE systems, if symbol k is a DMRS symbol, the above described iterative procedure can be used to improve the channel estimation on OFDM symbol k.

Even though communication performance can be improved significantly by the implementation previously described, higher SINR may be required by high-priority symbols such as symbols carrying control information, reference signal symbols and symbols associated with URLLC.

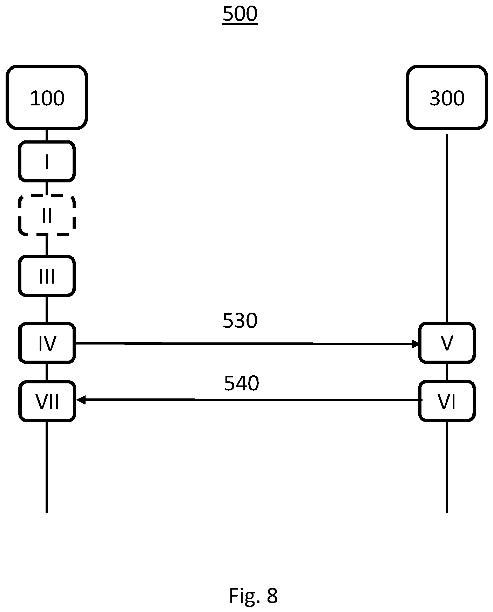

Therefore, Fig. 8 illustrates a solution for increasing transmission reliability for high-priority symbols by performing puncturing of the symbol preceding and/or succeeding the high priority symbol. The signaling diagram in Fig. 8 thus illustrates the interaction between the first communication device 100 and the second communication device 300 in a communication system 500 according to implementations of the disclosure. One or more of these steps in Fig. 8 are optional.

In step I in Fig. 8, the first communication device 100 determines that a third symbol has a higher priority than a fourth symbol preceding or succeeding the third symbol and that the delay spread of the radio channel exceeds the CP length of the third symbol. In implementations, the third symbol having the higher priority may be any of a DCI, UCI, CSI-RS, SRS, SSB, DMRS, or URLLC symbol.

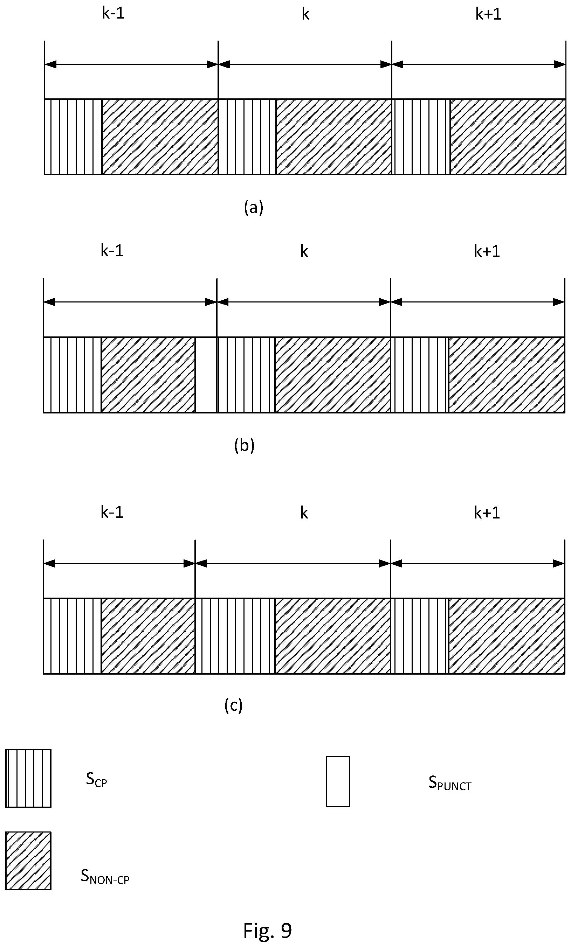

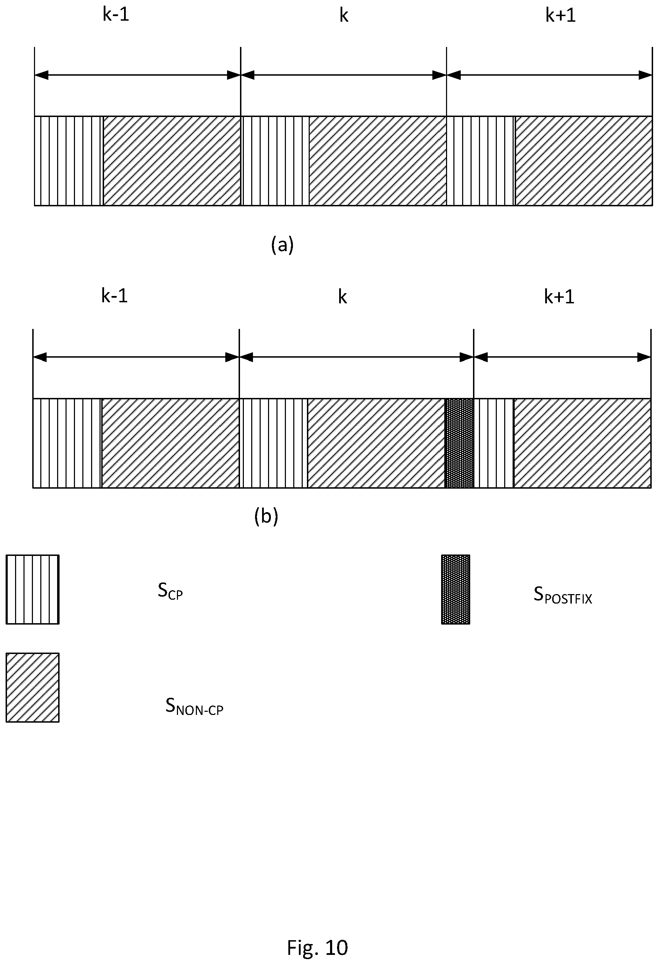

In step III in Fig. 8, the first communication device 100 upon determining that the third symbol has a higher priority than the fourth symbol may perform different operations or processing to mitigate or eliminate ICI and ISI. In an implementation a portion of the fourth symbol is punctured. In an implementation a CP of the third symbol is extended into a tail of the fourth symbol. In an implementation a cyclic postfix of the third symbol is added into a head of the fourth symbol. A cyclic postfix is a copy of the head of a symbol and attached after the tail of the symbol. These implementations can be combined such that one two or all of the operations are performed. Figs 9a - 9c and 10a-10b in the following disclosure illustrates such non-limiting examples.

In step IV in Fig. 8, the first communication device 100 transmits 530 the third and the fourth symbol to the second communication device 300. Optionally, to facilitate advanced receiver, information related to the puncturing can be signaled to the second communication device 300, such as at least one of the number of samples punctured adjacent to the high priority symbol and the number of CP samples extended for the high priority symbol.

Optionally, the first communication device 100 may perform rate matching before performing the puncturing to minimize the impact due to puncturing of low priority symbols. This is performed in the optional step II in Fig. 8. After performing puncturing of symbols preceding and/or succeeding the high priority symbols, to further improve SINR of the next symbol, the high priority symbol can be extended into the gap due to puncturing of the low priority symbol(s).

In step V in Fig. 8, the second communication device 300 receives the third symbol and the fourth symbol preceding or succeeding the third symbol, where the third symbol has a higher priority than the fourth symbol.

In step VI in Fig. 8, the second communication service 300 determines an acknowledge (ACK) or negative acknowledge (NACK) outcome at the reception of the fourth symbol and transmits 540 a CBG-based ACK or a CBG-based NACK feedback to the first communication device 100 according to the determined ACK/NACK outcome. This is to overcome the loss of data in low priority symbols due to puncturing.

In step VII in Fig. 8, the first communication device 100 receives the CBG-based ACK or NACK feedback 540 in response to transmission of the fourth symbol to the second communication device 300. If an ACK is received the first communication device 100 can continue with transmission of succeeding symbols. However, if a NACK is received one or more retransmissions of the fourth symbol can be performed.

Figs 9a - 9c illustrate an approach to perform symbol puncturing and CP extension for transmission of high-priority symbols to mitigate ISI and ICI according to an implementation of the disclosure.

Fig. 9a shows three consecutive symbols denoted k-1, k and k+1 which are to be transmitted by the first communication device 100 to the second communication device 300. Symbols k-1, k and k+1 each has a CP part $S_{CP}$ and a non-CP part $S_{NON-CP}$. Symbol k corresponds to the previously mentioned third symbol, i.e. the symbol with high priority. Symbol k-1 and symbol k+1 correspond to the previously mentioned fourth symbol, i.e. the symbol preceding or succeeding the third symbol.

When the first communication device 100 determines that the channel delay spread is larger than CP length and symbol k has higher priority than symbol k-1, the first communication device 100 can puncture samples of symbol k-1 preceding the CP part of symbol k, i.e. $S_{PUNCT}$. During the puncturing time the first communication device 100 does not transmit anything. After puncturing, the first communication device 100 transmits symbol k as shown in Fig. 9b.

Further, instead of non-transmission during puncturing the first communication device 100 may extend its CP part $S_{CP}$ into the punctured part of symbol k-1 as shown in Fig. 9c. Thereby, the guard interval of symbol k will be extended and hence improved protection against ICI and ISI.

Figs. 10a - 10b show other approach to perform symbol puncturing for transmission of high-priority symbols to mitigate ISI and ICI according to implementations of the disclosure. As illustrated in Fig. 10a, three consecutive symbols k-1, k and k+1 are considered. As in Fig. 9a symbols k-1, k and k+1 each has a CP part $S_{CP}$ and a non-CP part $S_{NON-CP}$.

Further, Symbol k corresponds to the previously mentioned third symbol, i.e. the symbol with high priority. Symbol k-1 and symbol k+1 correspond to the previously mentioned fourth symbol, i.e. the symbol preceding or succeeding the third symbol.

If the first communication device 100 obtains information that the channel delay spread is larger than CP length and the symbol k has higher priority than symbol k+1, the first communication device 100 can puncture samples of the symbol k+1 succeeding the symbol k and append a postfix $S_{POSTFIX}$ of symbol k into the punctured part of symbol k+1 as shown in Fig. 10b. If the second communication device 300 is aware of such a postfix of the high priority symbol k, it can shift its fast Fourier transform (FFT) window to minimize the impact of ISI and ICI.

The first communication device 100 can also combine the two approaches illustrated in Figs 9a - 9c and 10a - 10b if symbol k has higher priority than symbol k-1 and k+1. The first communication device 100 in this case may puncture both lower priority symbols on each side of the symbol k (not shown in the Figs.).

Channel estimation and demodulation performance of implementations are shown in Table 2 and Table 3, respectively.

Channel power delay profile (PDP) has a few paths with delay larger than CP. At receiver side, the strongest path in channel estimation is cancelled as well as equalization. PDP and corresponding mean square error (MSE) of channel estimates is shown in Table 2 for different SNR values in dB, i.e. 10, 20, 30 and 40 dB. Row 1 shows the performance for a conventional solution while rows 2-4 show the performance for different implementations of the disclosure with ICI, ISI and ISCI. It is noted significant performance improvement and gain with solutions according to implementations of the disclosure.

**Table 2: Channel estimates MSE (dB)**

| SNR (dB)             | 10    | 20    | 30    | 40     |
|----------------------|-------|-------|-------|--------|
| 1) without cancellation | -9    | -14   | -15   | -15.5  |
| 2) ICI cancellation  | -9.5  | -15.5 | -17.5 | -17.5  |
| 3) ISI cancellation  | -9.5  | -15.5 | -17.5 | -17.5  |
| 4) ISCI cancellation | -10   | -18.5 | -22.5 | -23    |

Block error rate (BER) performance in Quadrature Phase Shift Keying (QPSK) is shown in Table 3 for different SNR values in dB, i.e. 10, 20, 30 and 40 dB. Rows 1 - 4 show the performance for implementations of the disclosure. Row 5 shows the performance for a conventional solution without cancellation. Row 1 shows the performance the BER gain from channel estimation according to implementations of the disclosure without cancellation on data symbol. With ICI cancellation and ISI cancellation on data symbol according to implementations of the disclosure is also shown in row 2 and 3, respectively. Further, the performance with ISCI cancellation on data symbol is shown in row 4. Moreover, improvement in gain with solutions according to implementations of the disclosure is also noted from Table 3.

**Table 3: BER in QPSK**

| SNR (dB)                                        | 10    | 20    | 30     | 40      |
|-------------------------------------------------|-------|-------|--------|---------|
| 1) without cancellation on data symbol          | 0.085 | 0.02  | 0.011  | 0.0105  |
| 2) ICI cancellation on data symbol              | 0.085 | 0.015 | 0.009  | 0.0085  |
| 3) ISI cancellation on data symbol              | 0.085 | 0.014 | 0.008  | 0.007   |
| 4) ISCI cancellation on data symbol             | 0.08  | 0.011 | 0.0049 | 0.004   |
| 5) without cancellation on data and DMRS symbol | 0.09  | 0.025 | 0.019  | 0.018   |

In one implementation of this application provides a chip, and the chip may be used for a communication device. The chip includes at least one communications interface, at least one processor, and at least one memory, where the communications interface, the processor, and the memory are interconnected by using a circuit (or by using a bus in some cases), and the processor invokes an instruction stored in the memory to perform the above method(s).

In one implementation of this application provides a communication device, and the communication device includes a memory and a processor. The memory is configured to store a program instruction, and the processor is configured to invoke the program instruction in the memory, to implement a function of the above communication device(s).

In one implementation of this application provides a non-volatile storage medium, and the non-volatile storage medium stores one or more pieces of program code. When a communication device executes the program code, the communication device performs a related method step performed by the above communication device(s).

Furthermore, any method according to implementations of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that implementations of the first communication device 100 and the second communication device 300 comprise the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the first communication device 100 and the second communication deice 300 may comprise, e.g., one or more instances of a CPU, a processing unit, a processing circuit, a processor, an ASIC, a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

The scope of protection is defined by the appended claims.

**Claims**

1. A first communication device (100) for a communication system (500), the first communication device (100) being configured to

   transmit at least one first symbol in a first physical resource block bundling in a radio channel to a second communication device (300); and
   transmit at least one second symbol in a second physical resource block bundling to the second communication device (300) upon determining that a delay spread of the radio channel exceeds a cyclic prefix length of the first symbol, wherein a size of the second physical resource block bundling is larger in the frequency domain than a size of the first physical resource block bundling.

2. The first communication device (100) according to claim 1, wherein the size of the first physical resource block bundling is equal to 1, 2, 3 or 4 physical resource blocks.

3. The first communication device (100) according to claim 2, wherein the size of the second physical resource block bundling is wideband.

4. The first communication device (100) according to any one of the preceding claims, configured to transmit a first control message (510) to the second communication device (300), wherein the first control message (510) includes the second physical resource block bundling.

5. The first communication device (100) according to any one of the preceding claims, wherein determining that the delay spread of the radio channel exceeds the cyclic prefix length of the first symbol comprises receive a second control message (520) from the second communication device (300), wherein the second control message (520) indicates that the delay spread of the radio channel exceeds the cyclic prefix length of the first symbol.

6. The first communication device (100) according to any one of the preceding claims, configured to upon determining that a third symbol has a higher priority than a fourth symbol preceding or succeeding the third symbol and that the delay spread of the radio channel exceeds the cyclic prefix length of the third symbol:

   puncture a part of the fourth symbol;
   extend a cyclic prefix of the third symbol into a tail of the fourth symbol; or

add a cyclic postfix of the third symbol into a head of the fourth symbol.

7. The first communication device (100) according to 6, wherein the third symbol is any of: a DCI, UCI, CSI-RS, SRS, SSB, DMRS, or URLLC symbol.

8. The first communication device (100) according to claim 6 or 7, configured to
receive CBG-based acknowledge or a CBG-based negative acknowledge feedback in response to transmission of the fourth symbol to the second communication device (300).

9. A second communication device (300) for a communication system (500), the second communication device (300) being configured to

receive at least one first symbol in a first physical resource block bundling in a radio channel from a first communication device (100); and
transmit a second control message to the first communication device upon determining that a delay spread of the radio channel exceeds a cyclic prefix length of the first symbol, wherein the second control message indicates that the delay spread of the radio channel exceeds the cyclic prefix length of the first symbol;
receive a first control message (510) from the first communication device (100), wherein the first control message (510) includes a second physical resource block bundling, wherein a size of the second physical resource block bundling is larger in the frequency domain than a size of the first physical resource block bundling; and
receive at least one second symbol in the second physical resource block bundling from the first communication device (100) based on the first control message (510).

10. The second communication device (300) according to claim 9, wherein the size of the first physical resource block bundling is equal to 1, 2, 3 or 4 physical resource blocks.

11. The second communication device (300) according to claim 9 or 10, wherein the size of the second physical resource block bundling is wideband.

12. The second communication device (300) according to any one of claims 9 to 11, configured to

receive a third symbol and a fourth symbol preceding or succeeding the third symbol, wherein the third symbol has a higher priority than the fourth symbol, and wherein
a part of the fourth symbol is punctured;
a cyclic prefix of the third symbol is extended into a tail of the fourth symbol; or
a cyclic postfix of the third symbol is added into a head of the fourth symbol.

13. The second communication device (300) according to claim 12, wherein the third symbol is any of: a DCI, UCI, CSI-RS, SRS, SSB, DMRS, or URLLC symbol.

14. The second communication device (300) according to claim 12 or 13, configured to

determine an acknowledge or negative acknowledge outcome at the reception of the fourth symbol; and
transmit CBG-based acknowledge or CBG-based negative acknowledge feedback to the first communication device (100) according to the determined acknowledge or negative acknowledge outcome.

15. A method for a first communication device (100), the method (200) comprising

transmitting (202) at least one first symbol in a first physical resource block bundling in a radio channel to a second communication device (300); and
transmitting (204) at least one second symbol in a second physical resource block bundling to the second communication device (300) upon determining that a delay spread of the radio channel exceeds a cyclic prefix length of the first symbol, wherein a size of the second physical resource block bundling is larger in the frequency domain than a size of the first physical resource block bundling.

16. A method for a second communication device (100), the method (400) comprising

receiving (402) at least one first symbol in a first physical resource block bundling in a radio channel from a first communication device (100); and

transmitting a second control message to the first communication device upon determining that a delay spread of the radio channel exceeds a cyclic prefix length of the first symbol, wherein the second control message indicates that the delay spread of the radio channel exceeds the cyclic prefix length of the first symbol;

receiving (404) a first control message (510) from the first communication device (100), wherein the first control message (510) includes a second physical resource block bundling, wherein a size of the second physical resource block bundling is larger in the frequency domain than a size of the first physical resource block bundling; and

receiving (406) a second symbol in the second physical resource block bundling from the first communication device (100) based on the first control message (510).

17. A computer program with a program code for performing a method according to claim 15 or 16 when the computer program runs on a computer.

**Patentansprüche**

1. Erste Kommunikationsvorrichtung (100) für ein Kommunikationssystem (500), wobei die erste Kommunikationsvorrichtung (100) zu Folgendem konfiguriert ist:

Übertragen mindestens eines ersten Symbols in einer ersten physikalischen Ressourcenblockbündelung in einem Funkkanal an eine zweite Kommunikationsvorrichtung (300); und
Übertragen mindestens eines zweiten Symbols in einer zweiten physikalischen Ressourcenblockbündelung an die zweite Kommunikationsvorrichtung (300) nach Bestimmen, dass eine Verzögerungsspreizung des Funkkanals eine zyklische Präfixlänge des ersten Symbols überschreitet, wobei eine Größe der zweiten physikalischen Ressourcenblockbündelung in dem Frequenzbereich größer als eine Größe der ersten physikalischen Ressourcenblockbündelung ist.

2. Erste Kommunikationsvorrichtung (100) nach Anspruch 1, wobei die Größe der ersten physikalischen Ressourcenblockbündelung gleich 1, 2, 3 oder 4 physikalischen Ressourcenblöcken ist.

3. Erste Kommunikationsvorrichtung (100) nach Anspruch 2, wobei die Größe der zweiten physikalischen Ressourcenblockbündelung breitbandig ist.

4. Erste Kommunikationsvorrichtung (100) nach einem der vorhergehenden Ansprüche, die zu Folgendem konfiguriert ist:
Übertragen einer ersten Steuerungsnachricht (510) an die zweite Kommunikationsvorrichtung (300), wobei die erste Steuerungsnachricht (510) die zweite physikalische Ressourcenblockbündelung beinhaltet.

5. Erste Kommunikationsvorrichtung (100) nach einem der vorhergehenden Ansprüche, wobei Bestimmen, dass die Verzögerungsspreizung des Funkkanals die zyklische Präfixlänge des ersten Symbols überschreitet, Folgendes umfasst:
Empfangen einer zweiten Steuerungsnachricht (520) von der zweiten Kommunikationsvorrichtung (300), wobei die zweite Steuerungsnachricht (520) anzeigt, dass die Verzögerungsspreizung des Funkkanals die zyklische Präfixlänge des ersten Symbols überschreitet.

6. Erste Kommunikationsvorrichtung (100) nach einem der vorhergehenden Ansprüche, die, nach Bestimmen, dass ein drittes Symbol eine höhere Priorität als ein viertes Symbol, das dem dritten Symbol vorangeht oder ihm folgt, aufweist, und dass die Verzögerungsspreizung des Funkkanals die zyklische Präfixlänge des dritten Symbols überschreitet, dazu konfiguriert ist, Folgendes auszuführen:

Durchstechen eines Teils des vierten Symbols;
Erweitern eines zyklischen Präfix des dritten Symbols in ein Ende des vierten Symbols; oder
Hinzufügen eines zyklischen Postfix des dritten Symbols in einen Kopf des vierten Symbols.

7. Erste Kommunikationsvorrichtung (100) nach Anspruch 6, wobei das dritte Symbol ein beliebiges der folgenden ist:
ein DCI-, UCI-, CSI-RS-, SRS-, SSB-, DMRS- oder URLLC-Symbol.

8. Erste Kommunikationsvorrichtung (100) nach Anspruch 6 oder 7, die zu Folgendem konfiguriert ist:
Empfangen einer CBG-basierten Bestätigungsrückmeldung oder einer CBG-basierten negativen Bestätigungsrückmeldung als Reaktion auf Übertragung des vierten Symbols an die zweite Kommunikationsvorrichtung (300).

9. Zweite Kommunikationsvorrichtung (300) für ein Kommunikationssystem (500), wobei die zweite Kommunikationsvorrichtung (300) zu Folgendem konfiguriert ist:
Empfangen mindestens eines ersten Symbols in einer ersten physikalischen Ressourcenblockbündelung in einem Funkkanal von einer ersten Kommunikationsvorrichtung (100); und

Übertragen einer zweiten Steuerungsnachricht an die erste Kommunikationsvorrichtung, nach Bestimmen, dass eine Verzögerungsspreizung des Funkkanals eine zyklische Präfixlänge des ersten Symbols überschreitet, wobei die zweite Steuerungsnachricht anzeigt, dass die Verzögerungsspreizung des Funkkanals die zyklische Präfixlänge des ersten Symbols überschreitet;
Empfangen einer ersten Steuerungsnachricht (510) von der ersten Kommunikationsvorrichtung (100), wobei die erste Steuerungsnachricht (510) eine zweite physikalische Ressourcenblockbündelung beinhaltet, wobei eine Größe der zweiten physikalischen Ressourcenblockbündelung in dem Frequenzbereich größer als eine Größe der ersten physikalischen Ressourcenblockbündelung ist; und
Empfangen mindestens eines zweiten Symbols in der zweiten physikalischen Ressourcenblockbündelung von der ersten Kommunikationsvorrichtung (100) basierend auf der ersten Steuerungsnachricht (510).

10. Zweite Kommunikationsvorrichtung (300) nach Anspruch 9, wobei die Größe der ersten physikalischen Ressourcenblockbündelung gleich 1, 2, 3 oder 4 physikalischen Ressourcenblöcken ist.

11. Zweite Kommunikationsvorrichtung (300) nach Anspruch 9 oder 10, wobei die Größe der zweiten physikalischen Ressourcenblockbündelung breitbandig ist.

12. Zweite Kommunikationsvorrichtung (300) nach einem der Ansprüche 9 bis 11, die zu Folgendem konfiguriert ist:

Empfangen eines dritten Symbols und eines vierten Symbols, das dem dritten Symbol vorangeht oder ihm folgt, wobei das dritte Symbol eine höhere Priorität als das vierte Symbol aufweist, und wobei
ein Teil des vierten Symbols durchstoßen ist;
ein zyklisches Präfix des dritten Symbols in ein Ende des vierten Symbols erweitert ist; oder
ein zyklisches Postfix des dritten Symbols in einen Kopf des vierten Symbols erweitert ist.

13. Zweite Kommunikationsvorrichtung (300) nach Anspruch 12, wobei das dritte Symbol ein beliebiges der Folgenden ist: ein DCI-, UCI-, CSI-RS-, SRS-, SSB-, DMRS- oder URLLC-Symbol.

14. Zweite Kommunikationsvorrichtung (300) nach Anspruch 12 oder 13, die zu Folgendem konfiguriert ist:

Bestimmen eines Bestätigungs- oder negativen Bestätigungsergebnisses beim Empfang des vierten Symbols; und
Übertragen einer CBG-basierten Bestätigungsrückmeldung oder CBG-basierten negativen Bestätigungsrückmeldung an die erste Kommunikationsvorrichtung (100) entsprechend dem ermittelten Bestätigungs- oder negativen Bestätigungsergebnis.

15. Verfahren für eine erste Kommunikationsvorrichtung (100), wobei das Verfahren (200) Folgendes umfasst:

Übertragen (202) mindestens eines ersten Symbols in einer ersten physikalischen Ressourcenblockbündelung in einem Funkkanal an eine zweite Kommunikationsvorrichtung (300); und
Übertragen (204) mindestens eines zweiten Symbols in einer zweiten physikalischen Ressourcenblockbündelung an die zweite Kommunikationsvorrichtung (300), nach Bestimmen, dass eine Verzögerungsspreizung des Funkkanals eine zyklische Präfixlänge des ersten Symbols überschreitet, wobei eine Größe der zweiten physikalischen Ressourcenblockbündelung in dem Frequenzbereich größer als eine Größe der ersten physikalischen Ressourcenblockbündelung ist.

16. Verfahren für eine zweite Kommunikationsvorrichtung (100), wobei das Verfahren (400) Folgendes umfasst:

Empfangen (402) mindestens eines ersten Symbols in einer ersten physikalischen Ressourcenblockbündelung in einem Funkkanal von einer ersten Kommunikationsvorrichtung (100); und

Übertragen einer zweiten Steuerungsnachricht an die erste Kommunikationsvorrichtung nach Bestimmen, dass eine Verzögerungsspreizung des Funkkanals eine zyklische Präfixlänge des ersten Symbols überschreitet, wobei die zweite Steuerungsnachricht anzeigt, dass die Verzögerungsspreizung des Funkkanals die zyklische Präfixlänge des ersten Symbols überschreitet;

Empfangen (404) einer ersten Steuerungsnachricht (510) von der ersten Kommunikationsvorrichtung (100), wobei die erste Steuerungsnachricht (510) eine zweite physikalische Ressourcenblockbündelung beinhaltet, wobei eine Größe der zweiten physikalischen Ressourcenblockbündelung in dem Frequenzbereich größer als eine Größe der ersten physikalischen Ressourcenblockbündelung ist; und

Empfangen (406) mindestens eines zweiten Symbols in der zweiten physikalischen Ressourcenblockbündelung von der ersten Kommunikationsvorrichtung (100) basierend auf der ersten Steuerungsnachricht (510).

17. Computerprogramm mit einem Programmcode zum Durchführen eines Verfahrens nach Anspruch 15 oder 16, wenn das Computerprogramm auf einem Computer ausgeführt wird.

## Revendications

1. Premier dispositif de communication (100) pour un système de communication (500), le premier dispositif de communication (100) étant configuré pour

transmettre au moins un premier symbole dans un premier regroupement de blocs de ressources physiques dans un canal radio à un second dispositif de communication (300) ; et

transmettre au moins un deuxième symbole dans un second regroupement de blocs de ressources physiques au second dispositif de communication (300) lors de la détermination qu'un étalement de retard du canal radio dépasse une longueur de préfixe cyclique du premier symbole, dans lequel une taille du second regroupement de blocs de ressources physiques est plus grande dans le domaine de fréquence qu'une taille du premier regroupement de blocs de ressources physiques.

2. Premier dispositif de communication (100) selon la revendication 1, dans lequel la taille du premier regroupement de blocs de ressources physiques est égale à 1, 2, 3 ou 4 blocs de ressources physiques.

3. Premier dispositif de communication (100) selon la revendication 2, dans lequel la taille du second regroupement de blocs de ressources physiques est à large bande.

4. Premier dispositif de communication (100) selon l'une quelconque des revendications précédentes, configuré pour transmettre un premier message de commande (510) au second dispositif de communication (300), dans lequel le premier message de commande (510) comporte le second regroupement de blocs de ressources physiques.

5. Premier dispositif de communication (100) selon l'une quelconque des revendications précédentes, dans lequel le fait de déterminer que l'étalement de retard du canal radio dépasse la longueur de préfixe cyclique du premier symbole comprend

le fait de recevoir un second message de commande (520) à partir du second dispositif de communication (300), dans lequel le second message de commande (520) indique que l'étalement de retard du canal radio dépasse la longueur de préfixe cyclique du premier symbole.

6. Premier dispositif de communication (100) selon l'une quelconque des revendications précédentes, configuré pour, lorsqu'il est déterminé qu'un troisième symbole a une priorité plus élevée qu'un quatrième symbole précédant ou suivant le troisième symbole et que l'étalement de retard du canal radio dépasse la longueur de préfixe cyclique du troisième symbole :

percer une partie du quatrième symbole ;

prolonger un préfixe cyclique du troisième symbole dans une queue du quatrième symbole ; ou

ajouter un suffixe cyclique du troisième symbole à une tête du quatrième symbole.

7. Premier dispositif de communication (100) selon la revendication 6, dans lequel le troisième symbole est l'un des symboles suivants : DCI, UCI, CSI-RS, SRS, SSB, DMRS ou URLLC.

8. Premier dispositif de communication (100) selon la revendication 6 ou 7, configuré pour recevoir un accusé de réception basé sur CBG ou un accusé de réception négatif basé sur CBG en réponse à la transmission du quatrième symbole au second dispositif de communication (300).

9. Second dispositif de communication (300) pour un système de communication (500), le second dispositif de communication (300) étant configuré pour

recevoir au moins un premier symbole dans un premier regroupement de blocs de ressources physiques dans un canal radio à partir d'un premier dispositif de communication (100) ; et
transmettre un second message de commande au premier dispositif de communication lors de la détermination qu'un étalement de retard du canal radio dépasse une longueur de préfixe cyclique du premier symbole, dans lequel le second message de commande indique que l'étalement de retard du canal radio dépasse la longueur de préfixe cyclique du premier symbole ;
recevoir un premier message de commande (510) à partir du premier dispositif de communication (100), dans lequel le premier message de commande (510) comporte un second regroupement de blocs de ressources physiques, dans lequel une taille du second regroupement de blocs de ressources physiques est plus grande dans le domaine de fréquence qu'une taille du premier regroupement de blocs de ressources physiques ; et
recevoir au moins un deuxième symbole dans le second regroupement de blocs de ressources physiques provenant du premier dispositif de communication (100) en fonction du premier message de commande (510).

10. Second dispositif de communication (300) selon la revendication 9, dans lequel la taille du premier regroupement de blocs de ressources physiques est égale à 1, 2, 3 ou 4 blocs de ressources physiques.

11. Second dispositif de communication (300) selon la revendication 9 ou 10, dans lequel la taille du second regroupement de blocs de ressources physiques est à large bande.

12. Second dispositif de communication (300) selon l'une quelconque des revendications 9 ou 11, configuré pour

recevoir un troisième symbole et un quatrième symbole précédant ou suivant le troisième symbole, dans lequel le troisième symbole a une priorité plus élevée que le quatrième symbole, et dans lequel
une partie du quatrième symbole est percée ;
un préfixe cyclique du troisième symbole est prolongé dans une queue du quatrième symbole ; ou
un suffixe cyclique du troisième symbole est ajouté à une tête du quatrième symbole.

13. Second dispositif de communication (300) selon la revendication 12, dans lequel le troisième symbole est l'un des symboles suivants : DCI, UCI, CSI-RS, SRS, SSB, DMRS ou URLLC.

14. Second dispositif de communication (300) selon la revendication 12 ou 13, configuré pour

déterminer un résultat d'accusé de réception ou d'accusé de réception négatif à la réception du quatrième symbole ; et
transmettre un accusé de réception basé sur CBG ou un accusé de réception négatif basé sur CBG au premier dispositif de communication (100) en fonction du résultat d'accusé de réception ou d'accusé de réception négatif déterminé.

15. Procédé pour un premier dispositif de communication (100), le procédé (200) comprenant

le fait de transmettre (202) au moins un premier symbole dans un premier regroupement de blocs de ressources physiques dans un canal radio à un second dispositif de communication (300) ; et
le fait de transmettre (204) au moins un deuxième symbole dans un second regroupement de blocs de ressources physiques au second dispositif de communication (300) lors de la détermination qu'un étalement de retard du canal radio dépasse une longueur de préfixe cyclique du premier symbole, dans lequel une taille du second regroupement de blocs de ressources physiques est plus grande dans le domaine de fréquence qu'une taille du premier regroupement de blocs de ressources physiques.

16. Procédé pour un second dispositif de communication (100), le procédé (400) comprenant

le fait de recevoir (402) au moins un premier symbole dans un premier regroupement de blocs de ressources physiques dans un canal radio à partir d'un premier dispositif de communication (100) ; et

le fait de transmettre un second message de commande au premier dispositif de communication lors de la détermination qu'un étalement de retard du canal radio dépasse une longueur de préfixe cyclique du premier symbole, dans lequel le second message de commande indique que l'étalement de retard du canal radio dépasse la longueur de préfixe cyclique du premier symbole ;

le fait de recevoir (404) un premier message de commande (510) à partir du premier dispositif de communication (100), dans lequel le premier message de commande (510) comporte un second regroupement de blocs de ressources physiques, dans lequel une taille du second regroupement de blocs de ressources physiques est plus grande dans le domaine de fréquence qu'une taille du premier regroupement de blocs de ressources physiques ; et

le fait de recevoir (406) un deuxième symbole dans le second regroupement de blocs de ressources physiques provenant du premier dispositif de communication (100) en fonction du premier message de commande (510).

17. Programme informatique avec un code de programme pour effectuer un procédé selon la revendication 15 ou 16 lorsque le programme informatique s'exécute sur un ordinateur.

100

110

102 ←→ 104

108

106

Fig. 1

200

202

204

Fig. 2

Fig. 3

Fig. 4

Fig. 5

Fig. 6

k-1　　　　　　k　　　　　　k+1

$S_{CP}$

$S_{NON\text{-}CP}$

Fig. 7

500

Fig. 8

k-1　　　　　　　　k　　　　　　　　k+1

(a)

k-1　　　　　　　　k　　　　　　　　k+1

(b)

k-1　　　　　　　　k　　　　　　　　k+1

(c)

$S_{CP}$

$S_{PUNCT}$

$S_{NON-CP}$

Fig. 9

(a)

(b)

$S_{CP}$

$S_{POSTFIX}$

$S_{NON\text{-}CP}$

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010061224 A1

- US 9313063 B1

**Non-patent literature cited in the description**

- Reduced Complexity Interference Cancellation for OFDM Systems With Insufficient Cyclic Prefix. **SHI WEI et al.** 2019 11TH INTERNATIONAL CONFERENCE ON WIRELESS COMMUNICATIONS AND SIGNAL PROCESSING (WCSP). IEEE, 23 October 2019, 1-6